# EUROPEAN PATENT APPLICATION

(11) **EP 1 111 822 A2**
(43) Date of publication of application: **27.06.2001**
(21) Application number: 00311055.8
(22) Date of filing: 12.12.2000
(51) Int. Cl.: H04B 17/00

(54) **A wireless channel quality indicator**

(30) Priority: 24.12.1999 US 471292
(71) Applicant: LUCENT TECHNOLOGIES INC., Murray Hill, New Jersey 07974-0636 (US)
(72) Inventor: Solondz, Max Aaron, Morris, NJ 07960 (US); Still, Donald Eric, Morristown, New Jersey 07960 (US)
(74) Representative: Buckley, Christopher Simon Thirsk

(57) **Abstract**

A method and apparatus for indicating the quality of a wireless telecommunications channel is disclosed. One embodiment comprises a method of processing an outgoing signal by receiving an incoming signal, generating a measure of signal strength of the incoming signal, and adding an in-band outgoing warning signal to the outgoing signal when, based on the measure of signal strength, the incoming signal is of unsatisfactory quality.

## Description

### Statement Of Related Cases

This case is a continuation-in-part of serial no. 08/575,975 filed December 21, 1995, now abandoned.

### Field Of The Invention

The present invention relates to wireless telecommunications in general and, in particular, to a method and apparatus that provide an indication of the quality of a wireless channel.

### Background Of The Invention

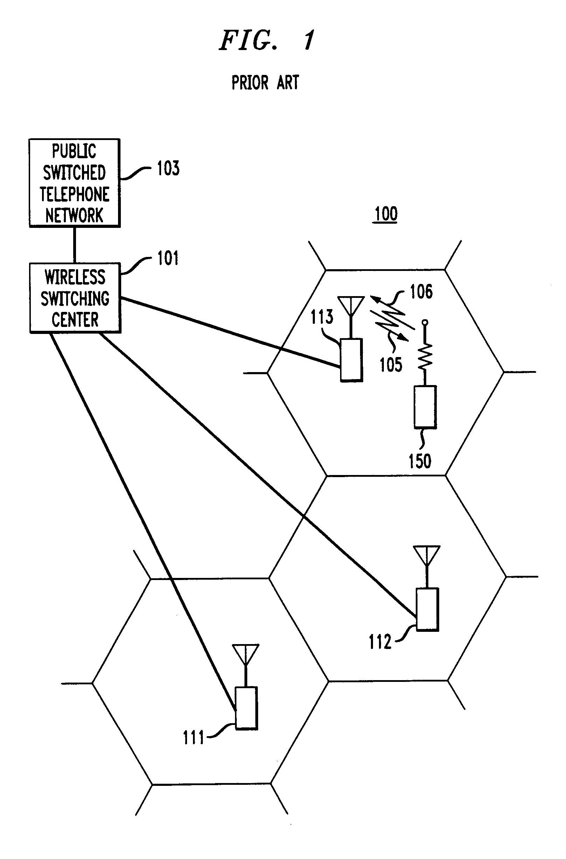

Fig. 1 depicts a schematic diagram of a portion of a wireless telecommunications system, designated generally as **100**, that services a number of wireless terminals that are situated within a geographic region. Wireless telecommunications system **100** typically comprises wireless switching center **101** and base stations **111** to **113**. Wireless switching center **101** is responsible for, among other things, routing calls between wireless terminals or, alternatively, between a wireless terminal and a wireline terminal that is accessible to wireless telecommunications system **100** via public switched telephone network **103**.

The geographic region serviced by wireless switching center **101** is typically partitioned into a number of spatially distinct regions called "cells." As depicted in Fig. 1, each cell is schematically represented by a hexagon; in practice, however, each cell invariably has an irregular shape that depends on the topography of the terrain and other factors. Typically, each cell contains a base station that is responsible for providing network access for the wireless terminals within that cell. Each base station typically includes the antennas and radios for communicating with the wireless terminals within the cell, and also includes the transmission equipment needed for communicating with wireless switching center **101**.

A base station typically establishes a duplex communication channel with a wireless terminal for the transmission of user information (*e.g*., voice, data, video, multimedia). The base station and wireless terminal can also establish one or more simplex or duplex communications channels for exchanging signaling information. Regardless of whether a duplex channel carries user or signaling information, it can be conceptualized as two separate and distinct simplex channels that operate in opposite directions. A simplex channel transmitted by a base station and received by a wireless terminal is known as a "downlink" or, alternatively, as a "forward channel." An example downlink channel is designated as **105** in Fig, 1. A simplex channel transmitted by a wireless terminal and received by a base station is known as an "uplink" or, alternatively, as a "reverse channel." An example uplink channel is designated as **106** in Fig. 1.

For the purposes of this specification, both an uplink signal as received by a base station and a downlink signal as received by a wireless terminals are "incoming signals." Also for the purposes of this specification, both a downlink signal transmitted by a base station and an uplink signal as transmitted by a wireless terminal are "outgoing signals."

### Summary Of The Invention

Some embodiments of the present invention are capable of indicating the quality of a wireless telecommunications channel while avoiding some of the costs and disadvantages of techniques in the prior art. For example, one embodiment comprises a method of processing an outgoing signal by receiving an incoming signal, generating a measure of signal strength of the incoming signal, and adding an outgoing warning signal to said outgoing signal when, based on at least said measure of signal strength, said incoming signal is of unsatisfactory quality.

### Brief Description Of The Drawings

**FIG. 1** is a schematic diagram of a wireless telecommunications system.

**FIG. 2** is a block diagram of a base station according to one embodiment of the present invention.

**FIG. 3** is a block diagram of an illustrative channel quality processor as shown in Fig. 2.

**FIG. 4** is a block diagram of a wireless terminal according to one embodiment of the present invention.

**FIG. 5** is a block diagram of a base station according to a second embodiment of the present invention.

### Detailed Description

A base station typically comprises more sophisticated radio equipment than a wireless terminal comprises and is, therefore, typically capable of transmitting with greater power and receiving with greater clarity than a wireless terminal. This disparity can cause the incoming signal received by a wireless terminal to have a different quality than the incoming signal received by a base station.

To illustrate a common example, there can be moments during a wireless call when the user of a wireless terminal receives the downlink signal clearly, while the recipient of the uplink signal receives only noise or silence. When such a wireless call carries a typical voice conversation, both parties to the call may notice that there is a problem, although each may have a different idea of what the specific problem is. For instance, because the user of the wireless terminal can clearly hear the other party, he or she may or may not be aware that the other party cannot hear them. The user may be able to infer from semantic discontinuities in the conversation that the other party cannot hear them, but this is not always obvious. Analogously, the lack of a good quality received signal will alert the recipient of the uplink signal to the fact that he cannot hear the user of the wireless terminal (i.e., the uplink is not functioning). The recipient of the uplink signal will, however, be incapable of discerning whether he can still be heard (i.e., whether the downlink is functioning).

When the opposite situation occurs (i.e., the user of the wireless terminal receives only noise or silence on the downlink and the uplink signal is received clearly), the semantic discontinuities may alert the respective parties to the fact that there is a problem. This condition is generally less common.

There are circumstances, however, when it can be more difficult, or even impossible,-for one or both parties to realize that either the uplink or the downlink is not being reliably received. For example, when the user of a wireless terminal calls an automated system (*e.g*., an Audix brand voice-mail system), the automated system may not be designed to provide the semantic clues that could alert the user to the fact that the uplink is not functioning. In such case, the user may be incorrectly lulled into believing that the automated system has received all of the information that the user has transmitted. Alternatively, if the automated system receives none, or only some, of the transmitted information, the automated system may respond in a manner that is unexpected, which might lead the user to incorrectly conclude that it is the automated system that is inoperable, and not the telecommunications link.

Some embodiments of the present invention are advantageously capable of determining that either the uplink or the downlink signal is not received with sufficient quality, and of notifying one or both parties of that fact.

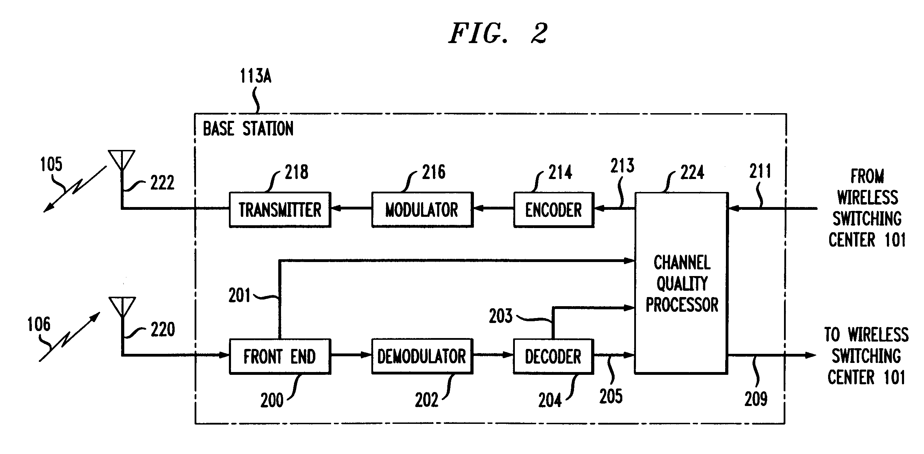

Fig. 2 depicts a block diagram of one embodiment of the present invention, base station **113a,** which receives an outgoing signal from wireless switching center **101** and transmits it as downlink signal **105** to wireless terminal **150**, and which also receives uplink signal **106**, which is the incoming signal, from wireless terminal **150** and transmits it to wireless switching center **101**. Base station **113a** advantageously comprises: receive antenna **220**, front-end **200**, demodulator **202**, decoder **204**, channel quality processor **224**, translator **208**, encoder **214**, modulator **216**, transmitter **218** and transmit antenna **222**, interconnected as shown.

The incoming signal is received by receive antenna **220** and processed by front-end **200**, which prepares the incoming signal for demodulation by demodulator **202**, in well-known fashion. Front-end **200** advantageously also measures the signal strength of the incoming signal, in well-known fashion, and sends the resulting measure to channel quality processor **224**, via lead **201**. Front-end **200** can measure the signal strength of the incoming signal according to any of one or more criteria (e.g., signal-to-noise ratio, absolute power in dBm, etc.). It will be clear to those skilled in the art how to make and use front-end **200** and demodulator **204**.

The incoming signal from front-end **200** is provided to demodulator **202**, which demodulates the incoming signal according to the appropriate demodulation scheme, in well-known fashion. The incoming signal from demodulator **202** is provided to decoder **204**, which decodes the incoming signal and advantageously determines a measure of the error rate in the incoming signal, in well-known fashion. For example, when base station **113a** is Interim Standard 95 ("IS-95") compliant, the error rate could be based on the frame error rate ("FER") of the signal. Decoder **204** advantageously provides both the decoded incoming signal and the measure of error rate to channel quality processor **224**.

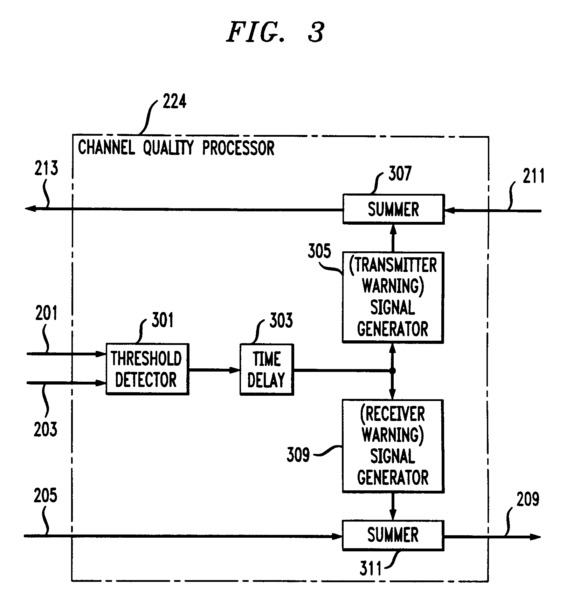

Channel quality processor **224** advantageously receives the measure of signal strength from front end **200**, the measure of error rate from decoder **204**, the incoming signal from decoder **204** and the outgoing signal from wireless switching center **101**, and outputs, an occasionally modified, outgoing signal to encoder **214** and outputs an, occasionally modified, incoming signal to wireless switching center **101**. The details of channel quality processor **224** will be described below with respect to Fig. 3. The outgoing signal passes from channel quality processor **224** through encoder **214**, modulator **216** and transmitter **218**, in well-known fashion, on its way to wireless terminal **150**.

Channel quality processor **224** advantageously receives both the measure of the signal strength and the measure of the error rate in the incoming signal and uses one or both criteria to determine when the quality of the incoming signal is above or below some acceptable threshold. For example, channel quality processor **224** could determine that the incoming signal quality is unsatisfactory when either: (1) the signal strength is below a predetermined threshold, or (2) the error rate is above another threshold. Alternatively, channel quality processor **224** could determine that the incoming signal quality is unsatisfactory when, and only when, both: (1) the signal strength is below a predetermined threshold, and (2) the error rate is above another threshold.

Regardless of the test used, when channel quality processor **224** determines that the incoming signal quality is unsatisfactory, it adds an "outgoing warning signal" to the outgoing signal and, advantageously, also adds an "incoming warning signal" to the incoming signal.

In some embodiments of the present invention, the outgoing warning signal is an in-band signal (*i*.*e*., it is within the same logical communications channel as the outgoing signal) and in other embodiments of the present invention, the outgoing warning signal is an out-of-band signal (*i.e.,* it is not within the same logical communications channel as the outgoing signal). Furthermore, in some embodiments of the present invention, the incoming warning signal is an in-band signal (*i.e*., it is within the same logical communications channel as the incoming signal) and in other embodiments of the present invention, the incoming warning signal is an out-of-band signal (*i.e.,* it is not within the same logical communications channel as the incoming signal).

When either or both of the incoming signal and outgoing signal represent audio signals, either or both of the outgoing warning signal and the incoming warning signal could represent, for example, an audible tone that will be heard by the respective party. Alternatively, either or both of the outgoing warning signal and the incoming warning signal could be encoded messages that directs the respective party's terminal to create a visible, audible or tactile indication that the incoming signal is not being received. It is preferred that the outgoing warning signal and the incoming warning signal be different so that each respective user can discern the exact nature of the problem.

For example, it is advantageous for both base station **113** and wireless terminal **150** to have the functionality provided by channel quality processor **224**. In this case, each could add an incoming warning signal to indicate to their respective local party that the incoming (*i.e*., downlink in the case of the wireless terminal user and uplink in the case of the other party) simplex channel is not functioning and add an outgoing warning signal for the benefit of the other party. In this way both parties could always be apprised of both the existence of a problem and of the nature of the problem.

Because the quality of a radio channel has a tendency to rapidly fluctuate, due to Rayleigh fading and other factors, the instantaneous addition of the incoming warning signal and the outgoing warning signal could lead to pulsing, which could be, at the very least, distracting and annoying. Therefore, it is advantageous for channel quality processor **224** to include a time delay (*e.g.* a hysteresis circuit) that would delay the addition of either or both of the incoming warning signal or the outgoing warning signal unless the incoming signal's quality was consistently unsatisfactory for a predetermined length of time (*e.g*., at least 200 ms.), but would immediately cease adding either or both of the incoming warning signal or the outgoing warning signal when said incoming signal becomes satisfactory again.

Fig. 3 depicts a block diagram of one embodiment of channel quality processor **224**. Channel quality processor **224** advantageously comprises: threshold detector **301**, time delay **303,** outgoing warning signal generator **305,** summer **307** incoming warning signal **309** and summer **311.** Threshold detector **301** advantageously receives both the measure of signal strength on lead **201** and the measure of error rate on lead **203** and determines the quality of the incoming signal and outputs a binary signal to time delay **303**, which binary signal indicates when the quality of the incoming signal is unsatisfactory. When threshold detector **301** indicates to time delay **303** that the quality of the incoming signal is unsatisfactory, time delay **303** waits, for the reasons discussed above, to assert its output until its input has been consistently asserted for a predetermined period of time.

When the input to time delay **303** has been consistently asserted for a predetermined period of time, time delay **303** asserts its output, which directs outgoing warning signal generator **305** and incoming warning signal generator **309** to generate their respective signals. The output of outgoing warning signal generator **305** is fed into summer **307** where it is summed, in well-known fashion, with the unencoded outgoing signal on lead **211**, and the output of incoming warning signal generator **309** is fed into summer **311** where it is summed, also in well-known fashion, with the decoded incoming signal on lead **205**.

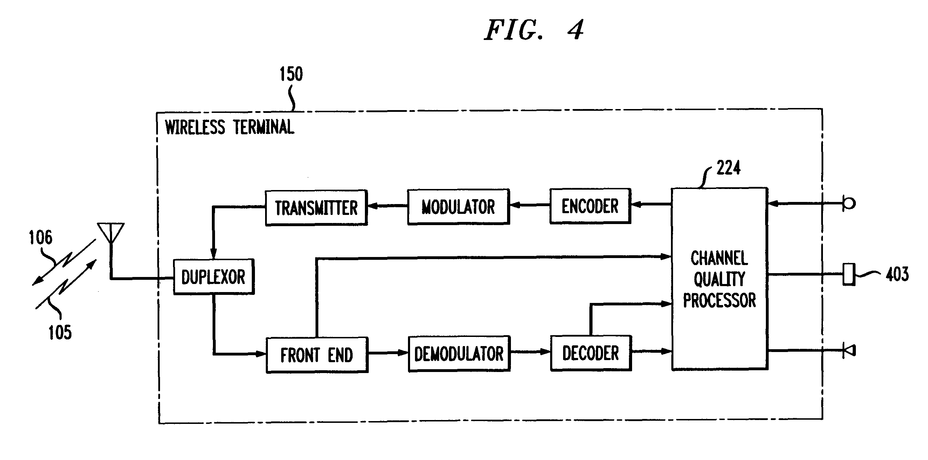

Fig. 4 depicts a block diagram of an embodiment of the present invention, which comprises a wireless terminal. This embodiment operates analogously to the embodiment presented above, which comprised a base station, but in this embodiment uplink signal **106** is the outgoing signal and downlink signal **105** is the incoming signal. Furthermore, the illustrative wireless terminal can comprise indicator **403,** which can output a visible, audible and/or tactile indication to the user of the wireless terminal that the incoming and/or outgoing signal is not being received with sufficient quality. From the above discussion, it will be clear to those skilled in the art how to make and use embodiments that comprise wireless terminals.

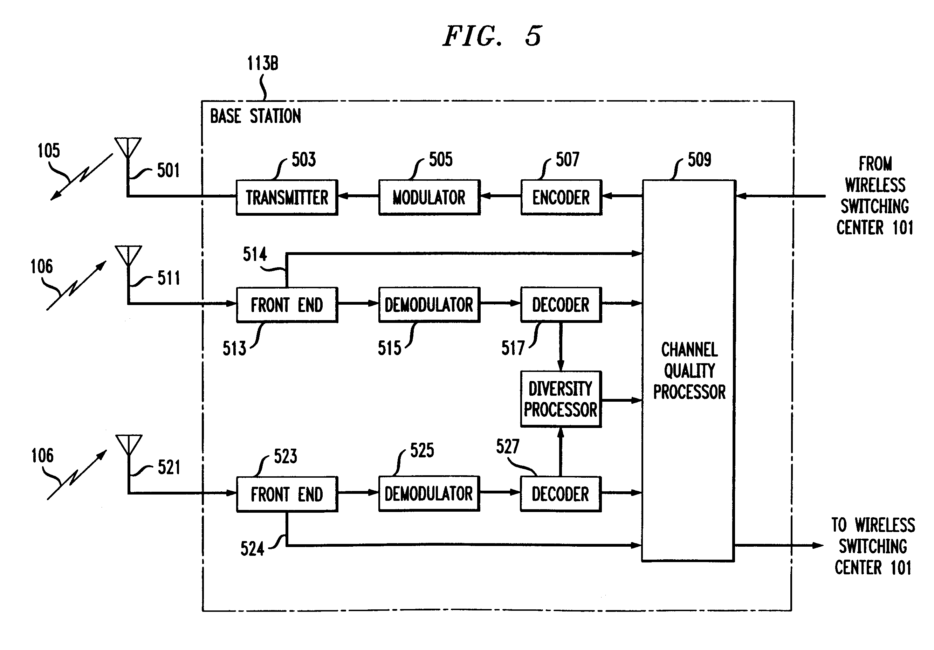

Fig. 5 depicts a block diagram of another embodiment of the present invention, base station **113b**, which has multiple reception paths for diversity reception. Base station **113b** advantageously comprises: receive antennas **511** and **521**, front ends **513** and **523**, demodulators **515** and **525**, decoders **517** and **527**, diversity processor **519**, channel quality processor **509**, encoder **507**, modulator **505** and transmitter **503**, interconnected as shown.

Uplink signal **106,** the incoming signal, is received by receive antennas **511** and **521** and processed by front ends **513** and **523**, respectively, in preparation for demodulation by demodulators **515** and **525**, respectively. Both front ends **513** and **523** advantageously measure the signal strength of their respectively received incoming signal and send the resulting measure to channel quality processor **509.** It should be understood that although both front end **513** and front end **523** are seeking to receive the same signal, because of the diversity of antennas **511** and **521**, the quality of the signal actually received by front end **513** is usually different from the quality of the signal received by front end **523**. Front end **513** sends its measure of signal strength to channel quality processor **509** on lead **514** and front end **523** sends its measure on lead **524**.

The signal from front end **513** is provided to demodulator **515**, which demodulates the signal according to the appropriate demodulation scheme, in well-known fashion. The demodulated signal from demodulator **515** is provided to decoder **517**, which decodes the signal and advantageously determines a measure of the error rate in the incoming signal, in well-known fashion. Decoder **515** advantageously provides the decoded incoming signal to diversity processor **519** and the measure of error rate to channel quality processor **509**. The operation of demodulator **525** and decoder **527** is analogous to that of demodulator **515** and decoder **517**.

Diversity processor **519** combines the signals from decoder **517** and decoder **527**, in well-known fashion, to minimize the effects of fading and produces an output signal that is, probabilistically, more robust than either signal alone. The output of diversity processor **519** is provided to channel quality processor **509**.

Channel quality processor **509** advantageously receives the measures of signal strength from front end **513** and front end **523**, the measures of error rate from decoder **517** and decoder **527**, the decoded incoming signal from diversity processor **519** and the unencoded outgoing signal from wireless switching center **101**, and outputs a potentially modified outgoing signal to encoder **507** and a potentially modified incoming signal to wireless switching center **101**. The outgoing signal passes from channel quality processor **509** through encoder **507**, modulator **505** and transmitter **503**, in well-known fashion, on its way to wireless terminal **150**.

Channel quality processor **509** advantageously receives both measures of the signal strength and both measures of the error rate and advantageously uses all four measures to determine when the quality of the incoming signal is above or below some acceptable threshold. Otherwise, the design and operation of channel quality processor **509** is analogous to channel quality processor **224**, except that it has four measures of signal quality on which to make its. determination. From the above description, it will be clear to those skilled in the art how to make and use channel quality processor **509.**

Although the subject invention has been described with respect to several illustrative embodiments, it will be readily apparent to those having skilled in the art to which it pertains that changes and modifications may be made without departing from the spirit or scope of the subject invention as defined by the appended claims.

It particular, as wireless telecommunications systems are increasingly being built on packet networks and client-server architectures, some or all of the functions taught above in the base station (e.g., the channel quality processor) may be moved from being located in the base station into one or more servers that are remote from the base station. Additionally, it will be clear to those skilled in the art that embodiments of the present invention can be embodied in peer-to-peer telecommunications equipment, such as walkie-talkies, CB radios and the like.

## Claims

1. A method of processing an incoming signal and an outgoing signal in a wireless base station, said method comprising:
receiving said incoming signal from a wireless terminal;
generating a measure of signal strength of said incoming signal;
adding an outgoing warning signal to said outgoing signal and adding an incoming warning
signal to said incoming signal when, based on at least said measure of signal strength,
said incoming signal is of unsatisfactory quality; and
transmitting said outgoing signal to said wireless terminal;wherein said outgoing warning signal is different than said incoming warning signal so that a party receiving one of said outgoing or incoming warning signals can discern whether the warning signal is indicative of a problem with said incoming signal or with said outgoing signal.

2. The method of claim 1 further comprising the step of generating a measure of error rate of said incoming signal, and wherein said step of adding an outgoing warning signal is also based on said measure of error rate.

3. A method of processing an incoming signal and an outgoing signal in a wireless base station, said method comprising:
receiving said incoming signal from a wireless terminal;
generating a measure of error rate of said incoming signal;
adding an outgoing warning signal to said outgoing signal and adding an incoming warning
signal to said incoming signal when, based on at least said measure of error rate, said incoming signal is of unsatisfactory quality; and
transmitting said outgoing signal to said wireless terminal; wherein said outgoing warning signal is different than said incoming warning signal so that a party receiving one of said outgoing or incoming warning signal can discern whether the warning signal is indicative of a problem with said incoming signal or with said outgoing signal.

4. The method of claim 1 or 3 wherein said outgoing warning signal is an in-band signal relative to said outgoing signal and said incoming warning signal is an in-band signal relative to said incoming signal.

5. The method of claim 4 wherein said outgoing signal represents an audio signal and said outgoing warning signal represents an audible tone.

6. The method of claim 1 or 3 wherein said outgoing warning signal is an encoded message that directs an indication to be made that said incoming signal is of unsatisfactory quality.

7. The method of claim 1 or 3 wherein said step of adding comprises the step of delaying the addition of said outgoing warning signal until said incoming signal is consistently of unsatisfactory quality for a predetermined length of time.

8. The method of claim 7 wherein said step of adding comprises the step of ceasing the addition of said outgoing warning signal immediately after said incoming signal becomes satisfactory, based on at least said measure of signal strength.

9. A method of processing an incoming signal and an outgoing signal in a wireless terminal, said method comprising:
receiving said incoming signal from a wireless base station;
generating a measure of signal strength of said incoming signal;
adding an outgoing warning signal to said outgoing signal and adding an incoming warning
signal to said incoming signal when, based on at least said measure of signal strength,
said incoming signal is of unsatisfactory quality; and
transmitting said outgoing signal to said wireless base station; wherein said outgoing warning signal is different than said incoming warning signal so that a party receiving one of said outgoing or incoming warning signals can discern whether the warning signal is indicative of a problem with said incoming signal or with said outgoing signal.

10. The method of claim 9 wherein said outgoing warning signal is an in-band signal relative to said outgoing signal and said incoming warning signal is an in-band signal relative to said incoming signal.

11. A method of processing an incoming signal and an outgoing signal in a wireless base station, said method comprising:
receiving said incoming signal from a wireless terminal;
generating a measure of error rate of said incoming signal;
adding an outgoing warning signal to said outgoing signal and adding an incoming warning
signal to said incoming signal when, based on at least said measure of error rate, said incoming signal is of unsatisfactory quality; and
transmitting said outgoing signal to said wireless terminal; wherein, said outgoing warning signal is an in-band signal relative to said outgoing signal, and said incoming warning signal is an in-band signal relative to said incoming signal.

12. A method of processing an incoming signal and an outgoing signal in a wireless base station, said method comprising:
receiving said incoming signal from a wireless terminal;
generating a measure of signal strength of said incoming signal;
adding an outgoing warning signal to said outgoing signal and adding an incoming warning
signal to said incoming signal when, based on at least said measure of
signal strength, said incoming signal is of unsatisfactory quality; and
transmitting said outgoing signal to said wireless terminal; wherein, said outgoing warning signal is an in-band signal relative to said outgoing signal, and said incoming warning signal is an in-band signal relative to said incoming signal.

13. A method of processing an incoming signal and an outgoing signal in a wireless terminal, said method comprising:
receiving said incoming signal from a wireless terminal;
generating a measure of signal strength of said incoming signal;
adding an outgoing warning signal to said outgoing signal and adding an incoming warning
signal to said incoming signal when, based on at least said measure of signal strength, said incoming signal is of unsatisfactory quality; and
transmitting said outgoing signal to said wireless terminal; wherein, said outgoing warning signal is an in-band signal relative to said outgoing signal, and said incoming warning signal is an in-band signal relative to said incoming signal.

14. The method of claim 11, 12 or 13 wherein said outgoing warning signal is different than said incoming warning signal.

15. A wireless base station comprising:
a front end for receiving an incoming signal and for generating a measure of signal strength of said incoming signal;
a decoder for decoding said incoming signal and for generating a measure of error rate of said incoming signal;
a channel quality processor for adding an outgoing warning signal to an outgoing signal and
adding an incoming warning signal to said incoming signal when said incoming signal is, based on at least said measure of signal strength and said measure of error rate, of unsatisfactory quality;
an encoder for encoding said outgoing signal and said outgoing warning signal; and
a transmitter for transmitting said outgoing signal and said outgoing warning signal:
wherein, said outgoing warning signal is an in-band signal relative to said outgoing signal, and said incoming warning signal is an in-band signal relative to said incoming signal.

16. A wireless terminal comprising:
a front end for receiving an incoming signal and for generating a measure of signal strength of said incoming signal;
a decoder for decoding said incoming signal and for generating a measure of error rate of said incoming signal;
a channel quality processor for adding an outgoing warning signal to an outgoing signal and adding an incoming warning signal to said incoming signal when said incoming signal is, based on at least said measure of signal strength, of unsatisfactory quality;
an audio speaker for outputting said incoming signal;
a microphone for receiving said outgoing signal;
an encoder for encoding said outgoing signal and said outgoing warning signal; and
a transmitter for transmitting said outgoing signal and said outgoing warning signal;
wherein, said outgoing warning signal is an in-band signal relative to said outgoing signal, and said incoming warning signal is an in-band signal relative to said incoming signal.

17. The wireless base station of claim 15 or the wireless terminal of claim 16 wherein said channel quality processor comprises a time delay for delaying the addition of said outgoing warning signal until said incoming signal is consistently of unsatisfactory quality for a predetermined length of time.

18. The wireless base station of claim 15 or the wireless terminal of claim 16 wherein said outgoing warning signal is different than said incoming warning signal.
